(19)

Europäisches
Patentamt
European
Patent Office
Office européen
des brevets

(11) **EP 4 336 312 A1**

(12) **EUROPEAN PATENT APPLICATION**
published in accordance with Art. 153(4) EPC

(43) Date of publication:
**13.03.2024  Bulletin 2024/11**

(21) Application number: **22823850.7**

(22) Date of filing: **30.03.2022**

(51) International Patent Classification (IPC):
***G06F 3/01*** (2006.01)

(52) Cooperative Patent Classification (CPC):
**G06F 3/01**

(86) International application number:
**PCT/CN2022/084149**

(87) International publication number:
**WO 2022/262359 (22.12.2022 Gazette 2022/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.06.2021  CN 202110679683**

(71) Applicant: **Huawei Technologies Co., Ltd.
Longgang
Shenzhen, Guangdong 518129 (CN)**

(72) Inventors:
• **LI, Jin
  Shenzhen, Guangdong 518129 (CN)**
• **CHANG, Shaokang
  Shenzhen, Guangdong 518129 (CN)**
• **WANG, Kangrui
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **GESTURE RECOGNITION METHOD, ELECTRONIC DEVICE, AND STORAGE MEDIUM**

(57)    Embodiments of this application provide a gesture recognition method, an electronic device, and a storage medium, and relate to the field of communications technologies. The method includes: sending an ultrasonic wave with a preset frequency; receiving an ultrasonic echo corresponding to the ultrasonic wave by using a plurality of microphones separately, to obtain a plurality of first sound wave signals; performing accumulation on the plurality of first sound wave signals based on a gesture recognition area, to obtain a second sound wave signal, where the gesture recognition area is a frequency area associated with the preset frequency, and an amplitude of the second sound wave signal in the gesture recognition area is greater than an amplitude of each first sound wave signal in the gesture recognition area; and recognizing a gesture based on the second sound wave signal. According to the method provided in embodiments of this application, a gesture recognition distance can be increased.

FIG. 3

EP 4 336 312 A1

## Description

This application claims priority to Chinese Patent Application No. 202110679683.8, filed with the China National Intellectual Property Administration on June 18, 2021 and entitled "GESTURE RECOGNITION METHOD, ELECTRONIC DEVICE, AND STORAGE MEDIUM", which is incorporated herein by reference in its entirety.

## TECHNICAL FIELD

Embodiments of this application relate to the field of communications technologies, and in particular, to a gesture recognition method, an electronic device, and a storage medium.

## BACKGROUND

With the development of information technologies, gestures are becoming an increasingly popular manner of interacting with devices such as computers, mobile phones, and sound boxes. Currently, there are usually two technologies to implement gesture recognition. The first is a computer vision technology. The development of computer vision can effectively and accurately complete gesture recognition, but the computer vision is relatively sensitive to conditions such as illumination, is vulnerable to a range limitation of a viewing angle, and is relatively complex to deploy. The second is an ultrasonic gesture. In this method, a speaker in a device is used to send an ultrasonic wave, and a Doppler frequency shift is generated when the ultrasonic wave is reflected by a moving object (for example, a gesture motion) in the air within a specific distance. A microphone in the device receives a reflected signal, and various gestures are deduced by using the Doppler frequency shift.

However, when the ultrasonic wave is transmitted in a medium, energy of the ultrasonic wave gradually decreases with the increase of a propagation distance. This phenomenon is called ultrasonic attenuation. A long-distance recognition effect is poor because the longer the distance, the more severe an echo energy that can be reflected by a moving object is attenuated. In the conventional technology, a distance for ultrasonic gesture recognition generally does not exceed 2 meters, that is, the distance for ultrasonic gesture recognition is relatively short. In addition, because ultrasonic gesture recognition is susceptible to interference from full-frequency band noise, single-frequency noise, and a sound emitted by a device, an anti-noise interference capability of ultrasonic gesture recognition is also relatively poor.

## SUMMARY

Embodiments of this application provide a gesture recognition method, an electronic device, and a storage medium, to provide a gesture recognition manner, thereby increasing a gesture recognition distance.

According to a first aspect, an embodiment of this application provides a gesture recognition method, applied to an electronic device, where the electronic device includes a plurality of microphones, and the method includes:

> sending an ultrasonic wave with a preset frequency, where the preset frequency may be a center frequency of the ultrasonic wave, for example, 24 kHz, 48 kHz, or 96 kHz;
> receiving an ultrasonic echo corresponding to the ultrasonic wave by using the plurality of microphones separately, to obtain a plurality of first sound wave signals, where when the ultrasonic wave is blocked by a palm of a user on a propagation path, the ultrasonic wave generates an echo;
> performing accumulation on the plurality of first sound wave signals based on a gesture recognition area, to obtain a second sound wave signal, where the gesture recognition area is a frequency area associated with the preset frequency, and an amplitude of the second sound wave signal in the gesture recognition area is greater than an amplitude of each first sound wave signal in the gesture recognition area; and
> recognizing a gesture based on the second sound wave signal.

In embodiments of this application, amplitudes in the gesture recognition area of a plurality of microphones are accumulated, so that energy of the gesture recognition area can be improved, and a gesture of a user can be effectively recognized at a longer distance.

In a possible implementation, the gesture recognition area is a frequency area determined according to the Doppler frequency shift principle and based on the preset frequency and a gesture speed.

In a possible implementation, the method further includes:

when the amplitude of the second sound wave signal in the gesture recognition area is greater than a preset amplitude, determining that a gesture is detected.

In an embodiment of this application, a gesture can be effectively recognized by determining an amplitude in a gesture recognition area, thereby improving gesture recognition efficiency.

In a possible implementation, the gesture recognition area includes a moving-away gesture recognition area that is on the left of the preset frequency, and/or an approaching gesture recognition area that is on the right of the preset frequency; and the method further includes:

when an amplitude of the second sound wave signal in the moving-away gesture recognition area is greater than the preset amplitude, determining that a moving-away gesture is detected; and
when an amplitude of the second sound wave signal in the approaching gesture recognition area is greater than the preset amplitude, determining that an approaching gesture is detected.

In embodiments of this application, gestures of different types are determined by distinguishing types of gesture recognition areas, so that gesture recognition flexibility can be improved.

In a possible implementation, the performing accumulation on the plurality of first sound wave signals based on a gesture recognition area, to obtain a second sound wave signal includes:

performing normalization on the plurality of first sound wave signals separately, to obtain a plurality of normalized first sound wave signals; and
performing accumulation on the plurality of normalized first sound wave signals based on the gesture recognition area, to obtain the second sound wave signal, where the gesture recognition area is a frequency area associated with the preset frequency, and the amplitude of the second sound wave signal in the gesture recognition area is greater than an amplitude of each normalized first sound wave signal in the gesture recognition area.

In embodiments of this application, normalization is performed on amplitudes in the gesture recognition area, so that an absolute value difference of amplitudes caused by different locations of a plurality of microphones can be reduced, thereby improving recognition accuracy.

In a possible implementation, the recognizing a gesture based on the second sound wave signal specifically includes:

performing noise filtering on the second sound wave signal to obtain a noise-filtered second sound wave signal; and
recognizing a gesture based on the noise-filtered second sound wave signal.

In embodiments of this application, noise is filtered, so that an anti-interference capability can be improved, and recognition accuracy can be improved.

In a possible implementation, the noise filtering includes at least one of environmental background noise filtering, single-frequency noise filtering, and self-sound filtering of an electronic device.

In a possible implementation, the sending an ultrasonic wave with a preset frequency specifically includes: sending an ultrasonic wave with a preset frequency in response to a detected preset trigger event, where the preset trigger event is any one of an alarm clock ringing event, an incoming call event, a timing reminder event, and a light on/off event.

In a possible implementation, the method further includes: when it is determined that a gesture is detected, performing any one of the following operations: turning off an alarm clock, answering or rejecting an incoming call, turning off a timing reminder, and turning on or turning off a light.

In a possible implementation, the second sound wave signal further includes a non-gesture recognition area, and an amplitude of the second sound wave signal in the non-gesture recognition area is determined by an average value of amplitudes of the plurality of first sound wave signals in the non-gesture recognition area.

In a possible implementation, the electronic device is any one of a smart speaker, a mobile phone, a large screen, a tablet, or an intelligent switch.

According to a second aspect, an embodiment of this application provides a gesture recognition apparatus, where the apparatus is applied to an electronic device, and the electronic device includes a plurality of microphones and includes:

a sending module, configured to send an ultrasonic wave with a preset frequency;
a receiving module, configured to receive an ultrasonic echo corresponding to the ultrasonic wave by using the plurality of microphones separately, to obtain a plurality of first sound wave signals;
an accumulation module, configured to perform accumulation on the plurality of first sound wave signals based on a gesture recognition area, to obtain a second sound wave signal, where the gesture recognition area is a frequency area associated with the preset frequency, and an amplitude of the second sound wave signal in the gesture recognition area is greater than an amplitude of each first sound wave signal in the gesture recognition area; and
a recognition module, configured to recognize a gesture based on the second sound wave signal.

**EP 4 336 312 A1**

In a possible implementation, the gesture recognition area is a frequency area determined according to the Doppler frequency shift principle and based on the preset frequency and a gesture speed.

In a possible implementation, the apparatus further includes:
a first determining module, configured to: when the amplitude of the second sound wave signal in the gesture recognition area is greater than a preset amplitude, determine that a gesture is detected.

In a possible implementation, the gesture recognition area includes a moving-away gesture recognition area that is on the left of the preset frequency, and/or an approaching gesture recognition area that is on the right of the preset frequency; and the apparatus further includes:

a second determining module, configured to: when an amplitude of the second sound wave signal in the moving-away gesture recognition area is greater than the preset amplitude, determine that a moving-away gesture is detected; and
when an amplitude of the second sound wave signal in the approaching gesture recognition area is greater than the preset amplitude, determine that an approaching gesture is detected.

In a possible implementation, the accumulation module is further configured to: perform normalization on the plurality of first sound wave signals separately, to obtain a plurality of normalized first sound wave signals; and
perform accumulation on the plurality of normalized first sound wave signals based on the gesture recognition area, to obtain the second sound wave signal, where the gesture recognition area is a frequency area associated with the preset frequency, and the amplitude of the second sound wave signal in the gesture recognition area is greater than an amplitude of each normalized first sound wave signal in the gesture recognition area.

In a possible implementation, the recognition module is further configured to: perform noise filtering on the second sound wave signal to obtain a noise-filtered second sound wave signal; and
recognize a gesture based on the noise-filtered second sound wave signal.

In a possible implementation, the noise filtering includes at least one of environmental background noise filtering, single-frequency noise filtering, and self-sound filtering of an electronic device.

In a possible implementation, the sending module is further configured to send an ultrasonic wave with a preset frequency in response to a detected preset trigger event, where the preset trigger event is any one of an alarm clock ringing event, an incoming call event, a timing reminder event, and a light on/off event.

In a possible implementation, the apparatus further includes:
an execution module, configured to: when it is determined that a gesture is detected, perform any one of the following operations: turning off an alarm clock, answering or rejecting an incoming call, turning off a timing reminder, and turning on or turning off a light.

In a possible implementation, the second sound wave signal further includes a non-gesture recognition area, and an amplitude of the second sound wave signal in the non-gesture recognition area is determined by an average value of amplitudes of the plurality of first sound wave signals in the non-gesture recognition area.

In a possible implementation, the electronic device is any one of a smart speaker, a mobile phone, a large screen, a tablet, or an intelligent switch.

According to a third aspect, an embodiment of this application provides an electronic device, including:
a memory, where the memory is configured to store computer program code, the computer program code includes instructions, the electronic device includes a plurality of microphones, and when the electronic device reads the instruction from the memory, the electronic device is enabled to perform the following steps:

sending an ultrasonic wave with a preset frequency;
receiving an ultrasonic echo corresponding to the ultrasonic wave by using the plurality of microphones separately, to obtain a plurality of first sound wave signals;
performing accumulation on the plurality of first sound wave signals based on a gesture recognition area, to obtain a second sound wave signal, where the gesture recognition area is a frequency area associated with the preset frequency, and an amplitude of the second sound wave signal in the gesture recognition area is greater than an amplitude of each first sound wave signal in the gesture recognition area; and
recognizing a gesture based on the second sound wave signal.

In a possible implementation, the gesture recognition area is a frequency area determined according to the Doppler frequency shift principle and based on the preset frequency and a gesture speed.

In a possible implementation, when the instruction is executed by the electronic device, the electronic device is enabled to further perform the following step:
when the amplitude of the second sound wave signal in the gesture recognition area is greater than a preset amplitude, determining that a gesture is detected.

4

In a possible implementation, the gesture recognition area includes a moving-away gesture recognition area that is on the left of the preset frequency, and/or an approaching gesture recognition area that is on the right of the preset frequency. When the instruction is executed by the electronic device, the electronic device is enabled to further perform the following step:

when an amplitude of the second sound wave signal in the moving-away gesture recognition area is greater than the preset amplitude, determining that a moving-away gesture is detected; and
when an amplitude of the second sound wave signal in the approaching gesture recognition area is greater than the preset amplitude, determining that an approaching gesture is detected.

In a possible implementation, when the instruction is executed by the electronic device, the step that the electronic device is enabled to perform accumulation on the plurality of first sound wave signals based on a gesture recognition area, to obtain a second sound wave signal includes:

performing normalization on the plurality of first sound wave signals separately, to obtain a plurality of normalized first sound wave signals; and
performing accumulation on the plurality of normalized first sound wave signals based on the gesture recognition area, to obtain the second sound wave signal, where the gesture recognition area is a frequency area associated with the preset frequency, and the amplitude of the second sound wave signal in the gesture recognition area is greater than an amplitude of each normalized first sound wave signal in the gesture recognition area.

In a possible implementation, when the instruction is executed by the electronic device, the step that the electronic device is enabled to recognize a gesture based on the second sound wave signal includes:

performing noise filtering on the second sound wave signal to obtain a noise-filtered second sound wave signal; and
recognizing a gesture based on the noise-filtered second sound wave signal.

In a possible implementation, the noise filtering includes at least one of environmental background noise filtering, single-frequency noise filtering, and self-sound filtering of an electronic device.

In a possible implementation, when the instruction is executed by the electronic device, the step that the electronic device is enabled to send an ultrasonic wave with a preset frequency includes:
sending an ultrasonic wave with a preset frequency in response to a detected preset trigger event, where the preset trigger event is any one of an alarm clock ringing event, an incoming call event, a timing reminder event, and a light on/off event.

In a possible implementation, when the instruction is executed by the electronic device, the electronic device is enabled to further perform the following step:
when it is determined that a gesture is detected, performing any one of the following operations: turning off an alarm clock, answering or rejecting an incoming call, turning off a timing reminder, and turning on or turning off a light.

In a possible implementation, the second sound wave signal further includes a non-gesture recognition area, and an amplitude of the second sound wave signal in the non-gesture recognition area is determined by an average value of amplitudes of the plurality of first sound wave signals in the non-gesture recognition area.

In a possible implementation, the electronic device is any one of a smart speaker, a mobile phone, a large screen, a tablet, or an intelligent switch.

According to a fourth aspect, an embodiment of this application provides a computer-readable storage medium. The computer-readable storage medium stores a computer program. When the computer program is run on a computer, the computer is enabled to perform the method according to the first aspect.

According to a fifth aspect, an embodiment of this application provides a computer program. When the computer program is executed by a computer, the computer program is configured to perform the method according to the first aspect.

In a possible design, all or some of the programs in the fifth aspect may be stored in a storage medium encapsulated with the processor, or some or all of the programs may be stored in a memory that is not encapsulated with the processor.

BRIEF DESCRIPTION OF DRAWINGS

FIG. 1 is a schematic diagram of an application scenario according to an embodiment of this application;

FIG. 2 is a schematic diagram of a hardware structure of an electronic device according to an embodiment of this application;

FIG. 3 is a schematic flowchart of a gesture recognition method according to an embodiment of this application;

FIG. 4 is a schematic diagram of gesture recognition area division according to an embodiment of this application;

FIG. 5 is a schematic diagram of gesture recognition area accumulation according to an embodiment of this application;

FIG. 6a and FIG. 6b are schematic diagrams of environmental noise filtering according to an embodiment of this application;

FIG. 7 is a schematic diagram of single-frequency noise filtering according to an embodiment of this application;

FIG. 8 is a schematic diagram of a gesture recognition effect according to an embodiment of this application; and

FIG. 9 is a schematic diagram of a structure of a gesture recognition apparatus according to an embodiment of this application.

## DESCRIPTION OF EMBODIMENTS

The following describes the technical solutions in embodiments of this application with reference to the accompanying drawings in embodiments of this application. In the descriptions of embodiments of this application, unless otherwise specified, "/" indicates "or". For example, A/B may indicate A or B. The term "and/or" in this specification merely describes an association relationship for describing associated objects, and indicates that three relationships may exist. For example, A and/or B may indicate the following three cases: only A exists, both A and B exist, and only B exists.

Terms "first" and "second" in the following are used for description only, and shall not be understood as an indication or implication of relative importance or implicit indication of a quantity of indicated technical features. Thus, a feature defined by "first" or "second" may explicitly or implicitly include one or more of the features. In the description of embodiments of this application, unless otherwise specified, "plurality of" means two or more than two.

Computer vision recognition requires that a camera be installed on a device, and the device needs to have a specific data processing capability. Therefore, costs are relatively high. However, ultrasonic gesture recognition has universality, and gesture recognition may be implemented on most devices with limited computing power. For example, gesture recognition may be performed by using a speaker and a microphone that are provided by the device, and no change needs to be made to existing hardware of the device.

However, when the ultrasonic wave is transmitted in a medium, energy of the ultrasonic wave gradually decreases with the increase of a propagation distance. This phenomenon is called ultrasonic attenuation. A long-distance recognition effect is poor because the longer the distance, the more severe an echo energy that can be reflected by a moving object is attenuated. In the conventional technology, a distance for ultrasonic gesture recognition generally does not exceed 2 meters, that is, the distance for ultrasonic gesture recognition is relatively short. In addition, because ultrasonic gesture recognition is susceptible to interference from full-frequency band noise, single-frequency noise, and a sound emitted by a device, an anti-noise interference capability of ultrasonic gesture recognition is also relatively poor.

Based on the foregoing problem, an embodiment of this application provides a gesture recognition method, to increase a distance for ultrasonic gesture recognition.

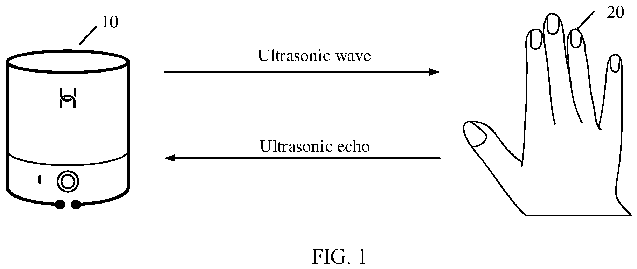

With reference to FIG. 1 to FIG. 8, a gesture recognition method provided in an embodiment of this application is described herein. FIG. 1 shows an application scenario provided in an embodiment of this application. Refer to FIG. 1. The foregoing application scenario includes a device 10 and a user 20. The device 10 may include one or more speakers and a plurality of microphones. The speaker may send an ultrasonic wave, and the microphone may receive an echo obtained after the ultrasonic wave is reflected by the user 20. For example, the device 10 may include 4 or 6 speakers and 4 or 6 microphones.

The device 10 may be an intelligent device having a speaker and a microphone, for example, a smart speaker. It may be understood that the foregoing smart speaker is merely an example for description. In some embodiments, the smart speaker may also be another smart device having a speaker and a microphone, including but not limited to a mobile phone, a tablet, a large screen, a smart robot, an intelligent switch, and the like. A specific form of the smart device 10 is not specifically limited in embodiments of this application.

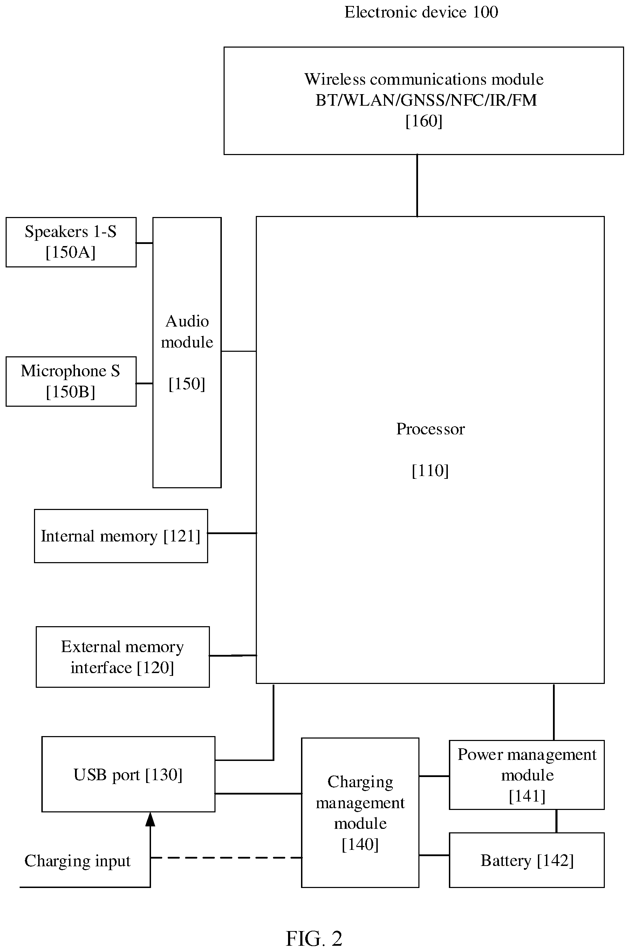

The following first describes an example of an electronic device provided in the following embodiment of this application with reference to FIG. 2. FIG. 2 is a schematic diagram of a structure of an electronic device 100. The electronic device 100 may be the foregoing device 10.

The electronic device 100 may include a processor 110, an external memory interface 120, an internal memory 121, a universal serial bus (universal serial bus, USB) interface 130, a charging management module 140, a power management module 141, a battery 142, an audio module 150, a loudspeaker 150A, a microphone 150B, and a wireless communications module 160.

It may be understood that the structure shown in this embodiment of this application does not constitute a specific limitation on the electronic device 100. In other embodiments of this application, the electronic device 100 may include more or fewer components than those shown in the figure, combine some components, split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors. The controller may be a nerve center and a command center of the electronic device 100. The controller may generate an operation control signal based on an instruction operation code and a time sequence signal, to complete control of instruction fetching and instruction executing.

A memory may be further disposed in the processor 110, and is configured to store instructions and data. In some embodiments, the memory in the processor 110 is a cache. The memory may store instructions or data that has been used or cyclically used by the processor 110. If the processor 110 needs to use the instruction or the data again, the processor may directly invoke the instruction or the data from the memory. This avoids repeated access, reduces waiting time of the processor 110, and improves system efficiency.

Execution of the gesture recognition method provided in embodiments of this application may be controlled by the processor 110 or completed by invoking another component. For example, a processing program stored in the internal memory 121 in an embodiment of this application is invoked to implement gesture recognition of the user.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The USB port 130 is a port that conforms to a USB standard specification, and may be specifically a mini USB port, a micro USB port, a USB type-C port, or the like. The USB port 130 may be configured to connect to a charger to charge the electronic device 100, or may be configured to transmit data between the electronic device 100 and a peripheral device, or may be configured to connect to a headset for playing audio through the headset. The interface may alternatively be configured to connect to another electronic device like an AR device.

It may be understood that an interface connection relationship between the modules shown in this embodiment of this application is merely an example for description, and does not constitute a limitation on the structure of the electronic device 100. In some other embodiments of this application, the electronic device 100 may alternatively use an interface connection manner different from an interface connection manner in this embodiment, or use a combination of a plurality of interface connection manners.

The wireless communications module 160 may provide wireless communication solutions applied to the electronic device 100, such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communications module 160 may be one or more components integrating at least one communications processor module.

The external memory interface 120 may be used to connect to an external storage card, for example, a Micro SD card, to extend a storage capability of the electronic device 100. The external storage card communicates with the processor 110 by using the external memory interface 120, to implement a data storage function. For example, a music file or a video file is stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a sound playing function or an image playing function), and the like. The data storage area may store data (for example, audio data, and a phone book) created in a process of using the electronic device 100, and the like. In addition, the internal memory 121 may include a high-speed random access memory, and may further include a nonvolatile memory, for example, at least one magnetic disk storage device, a flash memory device, or a universal flash storage (universal flash storage, UFS). The processor 110 runs instructions stored in the internal memory 121 and/or instructions stored in the memory disposed in the processor, to perform various function applications and data processing of the electronic device 100.

The electronic device 100 may implement an audio function, for example, music playing and recording, through the audio module 150, the speaker 150A, the microphone 150B, the application processor, and the like. In some embodiments, the electronic device 100 may include one or S speakers 150A. In addition, the electronic device 100 may further include S microphones 150B, where S is a positive integer greater than 1.

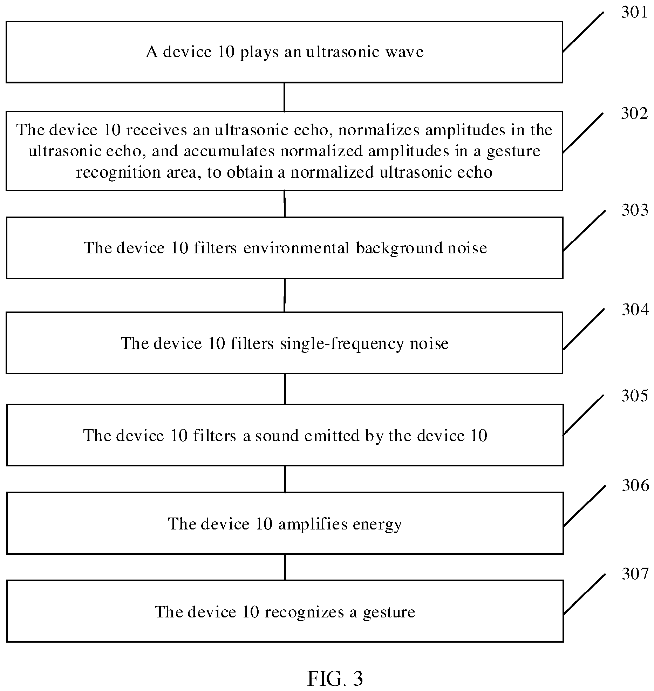

FIG. 3 is a schematic flowchart of an embodiment of a gesture recognition method according to an embodiment of this application. The method includes the following steps.

Step 301: A device 10 plays an ultrasonic wave.

Specifically, the ultrasonic wave may be played by using a loudspeaker in the device 10. The ultrasonic wave played by the device 10 may be a preset ultrasonic audio file stored in a memory of the device 10. A frequency (or a center frequency) of the ultrasonic wave may be preset, for example, 24 kHz, 48 kHz, or 96 kHz. It may be understood that the preset frequency of the ultrasonic wave is not specially limited in embodiments of this application. During specific implementation, triggering of playing the ultrasonic wave by the device 10 may be event triggering. For example, an alarm clock is used as an example. If a user sets the alarm clock on the device 10, when the alarm clock of the device 10 rings, the device 10 may play an ultrasonic wave at the same time, that is, the device 10 may play the ultrasonic wave by being triggered by an alarm clock ringing event. Therefore, if the user makes a gesture near the device 10, the device 10 may recognize the gesture of the user by receiving an echo of the ultrasonic wave, and determine whether the gesture is corresponding to a gesture of disabling an alarm clock, to determine whether to disable the alarm clock. It may be understood that the foregoing example shows only an example of an alarm clock scenario, and does not constitute a limitation on embodiments of this application. In some embodiments, the device 10 may be triggered to play an ultrasonic wave in another scenario. For example, in an incoming call scenario, after the device 10 receives an incoming call, the device 10 may be triggered to play the ultrasonic wave based on the incoming call event. For another example, in a timing reminder scenario, after the device 10 sends a timing reminder, the device 10 may be triggered to play the ultrasonic wave based on the timing reminder event. For another example, in a scenario of turning on/off a light, after the device 10 performs control of turning on or turning off a light, the device 10 may be triggered to play the ultrasonic wave based on the light on/off event.

Step 302: The device 10 receives an ultrasonic echo, normalizes amplitudes in the ultrasonic echo, and accumulates normalized amplitudes in a gesture recognition area, to obtain a normalized ultrasonic echo.

Specifically, after the speaker of the device 10 plays an ultrasonic wave, if the ultrasonic wave is blocked by a palm of the user 20 on a propagation path, the ultrasonic wave generates an echo. In this case, a plurality of microphones in the device 10 may collect the ultrasonic echo, so that echo data of each microphone may be obtained. The echo data may be used to recognize a gesture of the user.

It may be understood that the echo data is original audio data, that is, time domain data. Therefore, frequency domain data may be obtained after fast Fourier transform (Fast Fourier Transform, FFT) is performed on the time domain data. The foregoing example shows only an example of a manner of obtaining the frequency domain data by using FFT, and does not constitute a limitation on embodiments of this application. In some embodiments, the frequency domain data may be obtained in another transformation manner.

After frequency domain data corresponding to the time domain data collected by each microphone is obtained, an amplitude, in the gesture recognition area, of the frequency domain data corresponding to the time domain data collected by each microphone may be accumulated, so that an accumulated ultrasonic echo may be obtained. A specific meaning of the gesture recognition area is described in detail in a subsequent part. By accumulating amplitudes, in the gesture recognition area, of frequency domain data corresponding to time domain data collected by the plurality of microphones, the amplitudes in the gesture recognition area may be superimposed, that is, frequency domain energy in the gesture recognition area may be increased, and the device 10 can recognize a gesture more easily based on the frequency domain data. Therefore, a gesture recognition distance of the device 10 may be increased, that is, the device 10 can recognize a gesture at a farther distance.

Preferably, after the frequency domain data corresponding to the time domain data collected by each microphone is obtained, normalization may be performed on an amplitude of the frequency domain data corresponding to the time domain data collected by each microphone, so that a normalized amplitude of the frequency domain data corresponding to the time domain data collected by each microphone can be obtained. Then, normalized amplitudes in the gesture recognition area of all microphones may be accumulated, so that a normalized ultrasonic echo obtained after accumulation may be obtained.

It should be noted that the gesture can be recognized only after the frequency domain data in the gesture recognition area is recognized, and the frequency domain energy in the gesture recognition area can be increased only after the frequency domain data in the gesture recognition area of the plurality of microphones is accumulated. Therefore, frequency domain data outside the gesture recognition area is not accumulated, thereby avoiding interference caused by frequency domain data of other areas to the frequency domain data in the gesture recognition area after the energy is enhanced.

For example, the foregoing normalized amplitude accumulation manner may be implemented by using the following formula: $E_{sum} = \sum_{i=1}^{n} \frac{E_i}{E_{i,max}}$ , where $E_{sum}$ is a normalized amplitude obtained after accumulation in the gesture recognition area, $E_i$ is a normalized amplitude in a gesture recognition area of an $i^{th}$ microphone, $E_{i,max}$ is a maximum amplitude in frequency domain data corresponding to time domain data collected by the $i^{th}$ microphone, and n is a total quantity of microphones in the device 10. During specific implementation, the maximum amplitude $E_{i,max}$ may be an amplitude corresponding to a center frequency of each microphone. In other words, the maximum amplitude $E_{i,max}$ is a maximum amplitude in an entire frequency domain of frequency domain data corresponding to time domain data collected by each microphone. After the normalized amplitudes in the gesture recognition area of all the microphones are accumulated, the normalized amplitudes in the gesture recognition area of the plurality of microphones may be combined into one normalized amplitude accumulation value $E_{sum}$, that is, the normalized amplitudes in the gesture recognition area are increased by accumulating the normalized amplitudes of the plurality of microphones.

It should be noted that the frequency domain data outside the gesture recognition area may be obtained by using an average value of frequency domain data outside the gesture recognition area of the plurality of microphones. For example, the average value may be obtained by calculating amplitudes in an area outside the gesture recognition area of the plurality of microphones. Two microphones are used as an example. $E_{11}$ is an amplitude in an area outside a gesture recognition area of a first microphone, and $E_{12}$ is an amplitude in an area outside a gesture recognition area of a second microphone. In this case, an average value of amplitudes outside the gesture recognition area of the plurality of microphones may be $(E_{11}+E_{12})/2$.

It may be understood that, microphones are located at different positions (for example, arranged in a ring) in the device 10, so that distances between the microphones and the user are different, and an ultrasonic wave is attenuated quickly in air. As a result, absolute values of amplitudes of ultrasonic echoes received by the microphones differ greatly. $\frac{E_i}{E_{i,max}}$ is a value obtained after amplitude normalization. The value obtained after normalization is a ratio of an amplitude collected by each microphone to an amplitude of a center frequency of an ultrasonic wave. Therefore, direct accumulation of absolute values of amplitudes can be avoided, and it can be avoided that a difference between microphones leads to a difference of absolute values of amplitudes. In this way, the statistics are more accurate and more in line with the principle of a gesture recognition algorithm, and the gesture recognition distance can be better extended.

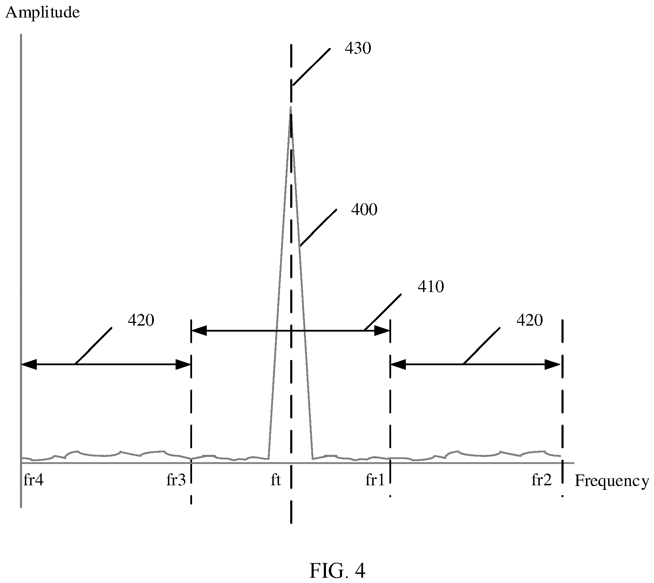

The gesture recognition area in the ultrasonic echo is described herein with reference to FIG. 4. As shown in FIG. 4, a frequency domain waveform 400 is frequency domain data obtained after normalization is performed on an ultrasonic echo collected by any microphone. A horizontal axis of the frequency domain waveform 400 is a frequency, and a vertical axis is an amplitude. The frequency domain waveform 400 includes a slow gesture area 410, a gesture recognition area 420, and a center frequency 430. It may be understood that the center frequency 430 is a center frequency of the ultrasonic echo. Generally, energy near the center frequency is the highest, and therefore, an amplitude near the center frequency 430 is the highest (a peak shown in FIG. 4). The slow gesture area 410 is an area for recognizing a low-speed moving object, that is, a frequency of the slow gesture area 410 is corresponding to an abnormal gesture, for example, a slow-moving scenario in which a user is walking. In an actual application, the device 10 may mistakenly consider that the user is walking as a gesture in detection. Therefore, that the user is walking is a scenario in which gesture recognition does not need to be performed. As a result, it needs to be distinguished whether the gesture is a normal gesture of the user or the user is walking. Therefore, in an embodiment of this application, the slow gesture area 410 may be filtered, and gesture recognition is performed only on the gesture recognition area 420.

The gesture recognition area 420 may be determined by using a Doppler formula. For example, when the user approaches the device 10, the Doppler formula is as follows:

$$f_r = f_t * \frac{C+v}{C-v} \tag{1};$$

and
when the user moves away from the device 10, the Doppler formula is as follows:

$$f_r = f_t * \frac{C-v}{C+v} \tag{2},$$

where
$f_r$ is a receiving frequency of the microphone, $f_t$ is an original frequency of the speaker, that is, a center frequency of the played ultrasonic wave, C is a sound speed, and v is a gesture speed of the user.

During specific implementation, FIG. 4 is used as an example. When the user approaches the device 10, it is assumed that a slow movement speed of the user is v1=1 m/s, v1 is substituted into the Doppler formula (1), and a frequency fr1 may be obtained. Then, it is assumed that a maximum gesture speed of the user is v2=6 m/s, v2 is substituted into the Doppler formula (2), and a frequency fr2 may be obtained. After the frequency fr1 and the frequency fr2 are obtained, it may be determined that a frequency domain interval between the frequency fr1 and the frequency fr2 is the gesture recognition area 420. The gesture recognition area 420 includes frequency domain corresponding to a normal gesture speed (for example, the normal gesture speed is between v1 and v2) of the user. A gesture of the user may be recognized in the gesture recognition area 420.

Then, when the user moves far away from the device 10, v1 and v2 are separately substituted into the Doppler formula (2), to obtain a frequency fr3 and a frequency fr4. After the frequency fr3 and the frequency fr4 are obtained, it may be determined that a frequency domain interval between the frequency fr3 and the frequency fr1 is the slow gesture area 410. The slow gesture area 410 includes frequency domain corresponding to a gesture speed less than a moving speed v1, and a user gesture does not need to be recognized in the slow gesture area 410; and a frequency domain interval between the frequency fr3 and the frequency fr4 is the gesture recognition area 420.

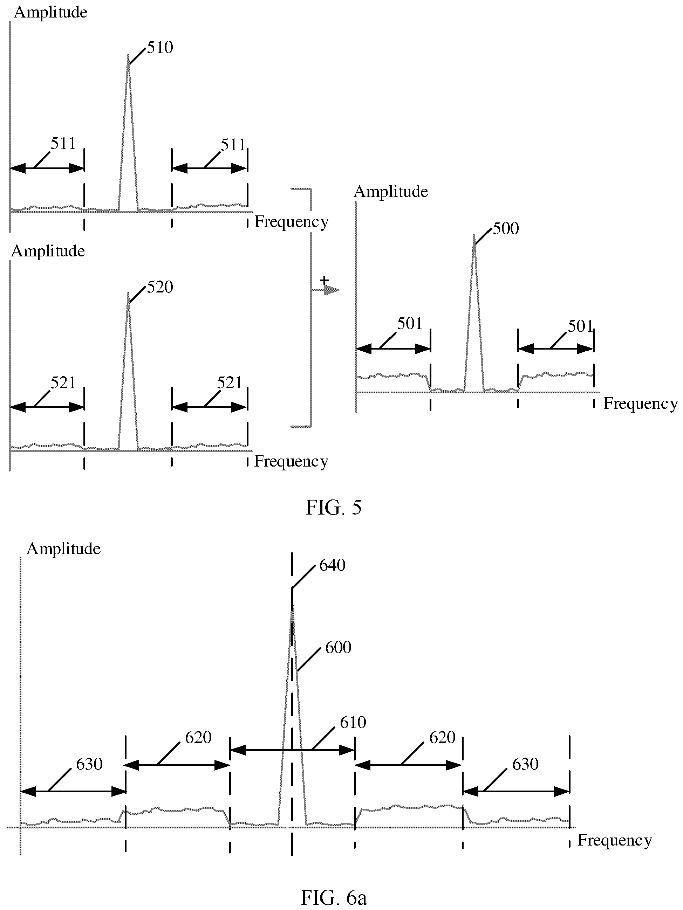

Next, with reference to FIG. 5, two microphones (for example, a microphone 1 and a microphone 2) are used as an example for description. FIG. 5 is a schematic diagram of accumulating amplitudes on which normalization is performed. A frequency domain waveform 510 is frequency domain data obtained after normalization is performed on an ultrasonic echo collected by the microphone 1, and the frequency domain waveform 510 includes a gesture recognition area 511. A frequency domain waveform 520 is frequency domain data obtained after normalization is performed on an ultrasonic echo collected by the microphone 2, and the frequency domain waveform 520 includes a gesture recognition area 521. The frequency domain waveform 500 may be obtained by accumulating an amplitude in a gesture recognition area of the microphone 1 and an amplitude in a gesture recognition area of the microphone 2. It can be learned that a normalized amplitude in a gesture recognition area 501 in the frequency domain waveform 500 is higher than both the amplitude in the gesture recognition area of the microphone 1 and the amplitude in the gesture recognition area of the microphone 2. To be specific, normalized amplitudes of ultrasonic echoes of a plurality of microphones in the gesture recognition area are accumulated, which helps recognize the gesture because the ultrasonic echoes can be enhanced.

It should be noted that the following uses the normalized amplitude as an example for description. However, this application does not limit the need to perform normalization on the ultrasonic echo. In other words, the normalization may not be performed, but the amplitudes of the ultrasonic echoes are directly accumulated and then noise filtering in the following steps is performed.

Step 303: The device 10 filters environmental background noise.

Specifically, to accurately recognize a gesture of the user, the device 10 may filter environmental background noise in the gesture recognition area, so that an anti-interference capability can be improved, and gesture recognition is more accurate. The filtering of the environmental background noise may be performed by using the following formula:

$$E_i' = E_{sum} - E_{noise}$$

, where $E_i'$ is an amplitude obtained after environmental background noise filtering is performed on the gesture recognition area, and $E_{noise}$ is an average amplitude of the environmental background noise. It may be understood that the average amplitude of the environmental background noise may be an average value of normalized amplitudes of the environmental background noise. During specific implementation, the average amplitude $E_{noise}$ of the environmental background noise may be an average amplitude of M frequencies on the left and right sides other than the gesture recognition area (for example, the area 420 in FIG. 4).

It should be noted that a value of M may be preset. During specific implementation, if the value of M is excessively small, a sample quantity may be insufficient; or if the value of M is excessively large, a calculation amount may be excessively large. Therefore, the value of M may be an empirical value.

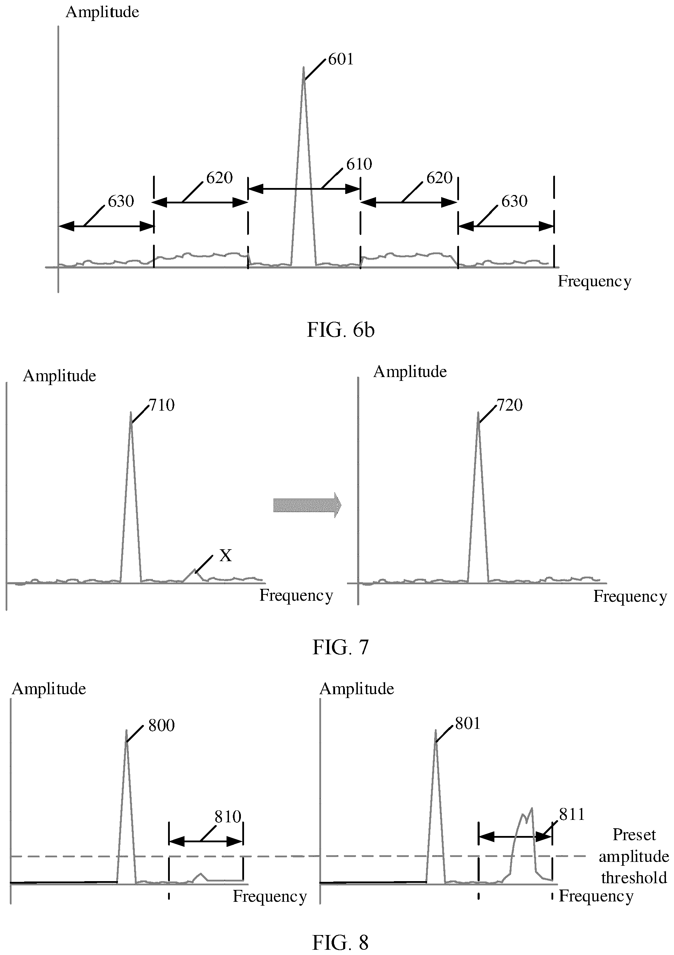

Next, an example is provided for description with reference to FIG. 6a and FIG. 6b. As shown in FIG. 6a, a frequency domain waveform 600 is a frequency domain waveform obtained after a plurality of microphones performs normalized accumulation on collected frequency domain data in a gesture recognition area. The frequency domain waveform 600 includes a slow gesture area 610, a gesture recognition area 620, an environmental noise area 630, and a center frequency 640. Then, environmental background noise may be filtered for the gesture recognition area 620. The environmental background noise may be filtered by subtracting an average amplitude of the environmental background noise from an accumulated value of a normalized amplitude in the gesture recognition area 620. After the environmental background noise is filtered in the gesture recognition area 620 shown in FIG. 6a, a frequency domain waveform 601 obtained after the environmental background noise is filtered shown in FIG. 6b may be obtained. The anti-interference capability can be improved by filtering the environmental background noise.

Step 304: The device 10 filters single-frequency noise.

Optionally, in a gesture recognition process, noise that continuously affects one or more frequencies may occur, for example, noise caused by a fan in a device (for example, a computer) near the device 10. Because the fan usually works at a fixed frequency, noise at a fixed frequency is caused. Therefore, the device 10 may further filter the single-frequency noise, thereby improving accuracy of gesture recognition. The single-frequency noise filtering may be performed by using an Alpha filtering method. It may be understood that the foregoing example shows only an example of filtering single-frequency noise in an Alpha filtering manner, and does not constitute a limitation on embodiments of this application. In some embodiments, the single-frequency noise may be filtered in another manner.

During specific implementation, the single-frequency noise affects only a specific frequency, and amplitudes on some frequencies are relatively large and persist. Therefore, single-frequency reference noise may be preset first, and an initial amplitude of the single-frequency reference noise may be determined by an average value of m normalized amplitude accumulation values $E_{sum}$ that are accumulated and that are collected earliest. An earliest collection moment may be after the device 10 is started (for example, powered on), and at this moment, generally, there is no gesture. It may be understood that, when collecting an ultrasonic echo, a microphone of the device 10 may sequentially collect audio frames of the ultrasonic echo. Therefore, the microphone of the device 10 may sequentially collect m audio frames that are collected earliest, and may calculate a normalized amplitude accumulation value $E_{sum}$ corresponding to each audio frame. Then, an average value is further calculated for the normalized amplitude accumulation values $E_{sum}$ corresponding to the m audio frames, so that a single-frequency reference noise amplitude may be obtained. Generally, first three audio frames do not include any gesture information. Therefore, preferably, m may be 3. It should be noted that m being 3 is merely a preferred manner of an embodiment of this application, and does not constitute a limitation on embodiments of this application. In some embodiments, m may be another value.

Then, the single-frequency noise may be filtered by using the following formula:

$E' = E_{sum} - E_{alpha}$, where E' is an amplitude obtained after the single-frequency noise is filtered, and $E_{alpha}$ is the single-frequency reference noise amplitude.

Optionally, the amplitude $E_{alpha}$ of the single-frequency reference noise may be further updated in real time. A manner of updating the amplitude $E_{alpha}$ of the single-frequency reference noise may be as follows: if no gesture is recognized currently, it may be considered that current frequency domain data includes latest single-frequency noise, and $E_{alpha}$ may be updated. The foregoing update manner may be performed by using the following formula:

$$E'_{alpha} = E_{alpha} * \alpha + E_{sum} * (1-\alpha)$$

, where $E_{alpha}'$ is an updated single-frequency reference noise amplitude, and $\alpha$ is a preset coefficient. The single-frequency reference noise amplitude is updated, so that the first device 10 can filter single-frequency noise based on a latest reference noise amplitude, thereby improving accuracy of gesture recognition.

It should be noted that, a determining result of whether a gesture exists in the foregoing recognition may be determined based on E'. For example, if E' is less than or equal to a preset threshold, it may be determined that no gesture exists in currently collected frequency domain data.

FIG. 7 is an effect diagram of filtering single-frequency noise. As shown in FIG. 7, a waveform 710 is a frequency domain waveform obtained before single-frequency noise is filtered, the waveform 710 includes noise near a specific frequency X, and a waveform 720 is a frequency domain waveform obtained after single-frequency noise is filtered. It can be learned that, after the single-frequency noise shown in FIG. 7 is filtered, the noise near the specific frequency X is successfully filtered out. Therefore, after the single-frequency noise is filtered, an anti-interference capability can be improved.

It may be understood that step 204 and step 203 may be performed in no sequence. To be specific, step 204 may be performed before step 203, may be performed after step 203, or may be performed simultaneously with step 203.

Step 305: The device 10 filters a sound emitted by the device 10.

Specifically, when a speaker of the device 10 emits a sound, frequency domain data collected by a microphone is affected, and several irregular and inconstant wave peaks are generated. For example, the device 10 plays an ultrasonic wave when ringing, and the ring tone causes several irregular and inconstant wave peaks to be generated in data of ultrasonic echoes collected by the microphone. It may be understood that the ring tone includes low-frequency pulse waves, and these pulse waves are irregularly and inconstantly distributed on frequency domain data of a full frequency band. However, these irregular and inconstant wave peaks may affect frequency domain data in a gesture recognition area, and therefore affect gesture recognition. Therefore, the device 10 may further filter, in an echo cancellation or high-pass filtering manner, the sound emitted by the device 10, to improve the anti-interference capability. It should be noted that, because the ring tone is low-frequency data, noise generated by the ring tone may be filtered out through high-pass filtering.

It may be understood that step 205, step 203, and step 204 may be performed in no sequence. To be specific, step 205 may be performed before step 203 or step 204, or may be performed after step 203 or step 204, or may be performed simultaneously with step 203 and/or step 204.

Step 306: The device 10 amplifies energy.

Specifically, after performing environmental background noise filtering and/or single-frequency noise filtering and/or self-sound filtering on the ultrasonic echo, the device 10 may further perform energy amplification on frequency domain data on which the environmental background noise filtering and/or single-frequency noise filtering and/or self-sound filtering are/is performed. During specific implementation, the foregoing energy amplification manner may be implemented by using the following formula:

$E'' = E_1 *$ *factor,* where E" is an amplified amplitude, $E_1$ is an amplitude of the frequency domain data on which environmental background noise filtering and/or single-frequency noise filtering and/or self-sound filtering are performed, and factor is a preset amplification multiple.

Step 307: The device 10 recognizes a gesture.

Specifically, to avoid misjudgment, the first device 10 may obtain a robust quantity of audio frames for recognition, and the quantity of the audio frames may be preset. During specific implementation, the device 10 may collect audio data within preset duration, or the device 10 may collect a preset quantity of audio frames, to ensure that the device 10 can collect a specific quantity of audio data. The audio data may be echo data of the ultrasonic wave. A plurality of audio frames may be obtained by sampling the audio data. It may be understood that a manner of collecting the preset quantity of audio data is not specially limited in embodiments of this application.

After obtaining a specific quantity of audio frames, the device 10 may process the audio frames by using step 202 to step 206, to obtain a frequency domain waveform on which normalization accumulation and noise filtering are performed. Then, gesture recognition may be performed based on the foregoing waveform, to determine whether a gesture of the user exists.

During specific implementation, whether a frequency that exceeds a preset amplitude threshold exists in a gesture recognition area in the audio frame may be detected. If it is detected that a frequency that exceeds the preset amplitude threshold exists in the gesture recognition area in the audio frame, it may be determined that a user gesture exists. If it is detected that no frequency that exceeds the preset amplitude threshold exists in the gesture recognition area in the audio frame, it may be determined that no user gesture exists. The user gesture may be a gesture of turning off the ring tone, a gesture of answering an incoming call or rejecting an incoming call, a gesture of turning off a timing reminder, or a gesture of turning on or turning off a light.

If determining that there is a gesture (for example, a gesture of turning off the ring tone), the device 10 may perform a corresponding operation based on a currently recognized gesture. For example, if the device 10 detects the gesture of turning off the ring tone of the user during ringing, the device 10 may turn off the ring tone. If the device 10 does not recognize the gesture, the device 10 may continue to collect echo data of the ultrasonic wave, and may further recognize a gesture of the user based on echo data of the ultrasonic wave.

FIG. 8 is a schematic diagram of a gesture recognition effect. As shown in FIG. 8, a frequency domain waveform 800 is a frequency domain waveform of an ultrasonic echo collected by a single microphone. When a user gesture is relatively far away from the device 10, because an amplitude in a gesture recognition area 810 of the frequency domain waveform 800 does not exceed a preset amplitude threshold, a long-distance user gesture cannot be recognized by using a single microphone. A frequency domain waveform 801 is a frequency domain waveform obtained after accumulation, noise filtering, and energy amplification of a plurality of microphones. Because an amplitude in a gesture recognition area 811 of the frequency domain waveform 801 has exceeded the preset amplitude threshold, it may be determined that a gesture of the user exists. In other words, a long-distance user gesture can be recognized through accumulation, noise filtering, and energy amplification of the plurality of microphones. Therefore, the gesture recognition distance can be increased by using the technical solution of this application.

It may be understood that, in the foregoing embodiment, step 201 to step 207 are all optional steps. This application provides only one feasible embodiment, and may further include more or fewer steps than step 201 to step 207. This is not limited in this application.

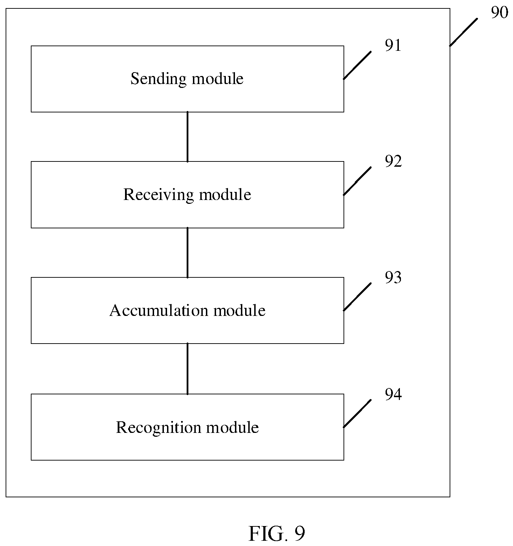

FIG. 9 is a schematic diagram of a structure of a gesture recognition apparatus according to an embodiment of this application. As shown in FIG. 9, the gesture recognition apparatus 90 is applied to an electronic device. The electronic device includes a plurality of microphones, and may include a sending module 91, a receiving module 92, an accumulation module 93, and a recognition module 94, where

a sending module 91, configured to send an ultrasonic wave with a preset frequency;

a receiving module 92, configured to receive an ultrasonic echo corresponding to the ultrasonic wave by using the plurality of microphones separately, to obtain a plurality of first sound wave signals;

an accumulation module 93, configured to perform accumulation on the plurality of first sound wave signals based on a gesture recognition area, to obtain a second sound wave signal, where the gesture recognition area is a frequency area associated with the preset frequency, and an amplitude of the second sound wave signal in the gesture recognition area is greater than an amplitude of each first sound wave signal in the gesture recognition area; and

a recognition module 94, configured to recognize a gesture based on the second sound wave signal.

In a possible implementation, the gesture recognition area is a frequency area determined according to the Doppler frequency shift principle and based on the preset frequency and a gesture speed.

In a possible implementation, the apparatus 90 further includes:

a first determining module 95, configured to: when the amplitude of the second sound wave signal in the gesture recognition area is greater than a preset amplitude, determine that a gesture is detected.

In a possible implementation, the gesture recognition area includes a moving-away gesture recognition area that is on the left of the preset frequency, and/or an approaching gesture recognition area that is on the right of the preset frequency; and the apparatus 90 further includes:

a second determining module 96, configured to: when an amplitude of the second sound wave signal in the moving-away gesture recognition area is greater than the preset amplitude, determine that a moving-away gesture is detected; and

when an amplitude of the second sound wave signal in the approaching gesture recognition area is greater than the preset amplitude, determine that an approaching gesture is detected.

In a possible implementation, the accumulation module 93 is further configured to: perform normalization on the plurality of first sound wave signals separately, to obtain a plurality of normalized first sound wave signals; and perform accumulation on the plurality of normalized first sound wave signals based on the gesture recognition area, to obtain the second sound wave signal, where the gesture recognition area is a frequency area associated with the preset frequency, and the amplitude of the second sound wave signal in the gesture recognition area is greater than an amplitude of each normalized first sound wave signal in the gesture recognition area.

In a possible implementation, the recognition module 94 is further configured to: perform noise filtering on the second sound wave signal to obtain a noise-filtered second sound wave signal; and

recognize a gesture based on the noise-filtered second sound wave signal.

In a possible implementation, the noise filtering includes at least one of environmental background noise filtering, single-frequency noise filtering, and self-sound filtering of an electronic device.

In a possible implementation, the sending module 91 is further configured to send an ultrasonic wave with a preset frequency in response to a detected preset trigger event, where the preset trigger event is any one of an alarm clock ringing event, an incoming call event, a timing reminder event, and a light on/off event.

In a possible implementation, the apparatus 90 further includes:

an execution module 97, configured to: when it is determined that a gesture is detected, perform any one of the following operations: turning off an alarm clock, answering or rejecting an incoming call, turning off a timing reminder, and turning on or turning off a light.

In a possible implementation, the second sound wave signal further includes a non-gesture recognition area, and an amplitude of the second sound wave signal in the non-gesture recognition area is determined by an average value of amplitudes of the plurality of first sound wave signals in the non-gesture recognition area.

In a possible implementation, the electronic device is any one of a smart speaker, a mobile phone, a large screen, a tablet, or an intelligent switch.

It may be understood that an interface connection relationship between the modules shown in this embodiment of this application is merely an example for description, and does not constitute a limitation on the structure of the electronic device 100. In some other embodiments of this application, the electronic device 100 may alternatively use an interface connection manner different from an interface connection manner in this embodiment, or use a combination of a plurality of interface connection manners.

It may be understood that, to implement the foregoing functions, the electronic device 100 includes a corresponding hardware structure and/or a corresponding software module for performing each function. A person skilled in the art should be easily aware that, with reference to units and algorithm steps of the examples described in embodiments disclosed in this specification, embodiments of this application can be implemented by hardware or a combination of hardware and computer software. Whether a function is performed by hardware or hardware driven by computer software depends on particular applications and design constraints of the technical solution. A person skilled in the art may use different methods to implement the described functions for each particular application, but it should not be considered that the implementation goes beyond the scope of embodiments of this application.

Function module division may be performed on the foregoing electronic device 100 and the like based on the foregoing method examples in the embodiments of this application. For example, each function module may be obtained through division corresponding to each function, or two or more functions may be integrated in one processing module. The integrated module may be implemented in a form of hardware, or may be implemented in a form of a software function module. It should be noted that, in embodiments of this application, division into the modules is an example, is merely logical function division, and may be other division in an actual implementation.

The foregoing description about the implementations allows a person skilled in the art to clearly understand that, for the purpose of convenient and brief description, division into only the foregoing function modules is used as an example for description. During actual application, the foregoing functions can be allocated to different function modules for implementation as required. In other words, an inner structure of an apparatus is divided into different function modules to implement all or some of the functions described above. For a specific working process of the system, apparatus, and unit, refer to a corresponding process in the method embodiments. Details are not described herein again.

Functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software function unit and sold or used as an independent product, the integrated unit may be stored in a computer-readable storage medium. Based on such an understanding, the technical solutions of embodiments of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) or a processor to perform all or some of the steps of the methods described in embodiments of this application. The foregoing storage medium includes any medium that can store program code, like a flash memory, a removable hard disk, a read-only memory, a random access memory, a magnetic disk, or an optical disc.

The foregoing description is merely a specific implementation of this application, but is not intended to limit the protection scope of this application. Any variation or replacement within the technical scope disclosed in this application shall fall within the protection scope of this application. Therefore, the protection scope of this application shall be subject to the protection scope of the claims.

## Claims

1. A gesture recognition method, applied to an electronic device, wherein the electronic device comprises a plurality of microphones, and the method comprises:

   sending an ultrasonic wave with a preset frequency;
   receiving an ultrasonic echo corresponding to the ultrasonic wave by using the plurality of microphones separately, to obtain a plurality of first sound wave signals;
   performing accumulation on the plurality of first sound wave signals based on a gesture recognition area, to obtain a second sound wave signal, wherein the gesture recognition area is a frequency area associated with the preset frequency, and an amplitude of the second sound wave signal in the gesture recognition area is greater than an amplitude of each first sound wave signal in the gesture recognition area; and
   recognizing a gesture based on the second sound wave signal.

2. The method according to claim 1, wherein the gesture recognition area is a frequency area determined according to the Doppler frequency shift principle and based on the preset frequency and a gesture speed.

3. The method according to claim 2, wherein the method further comprises:
   when the amplitude of the second sound wave signal in the gesture recognition area is greater than a preset amplitude, determining that a gesture is detected.

4. The method according to claim 2, wherein the gesture recognition area comprises a moving-away gesture recognition area that is on the left of the preset frequency, and/or an approaching gesture recognition area that is on the right of the preset frequency; and the method further comprises:

   when an amplitude of the second sound wave signal in the moving-away gesture recognition area is greater than the preset amplitude, determining that a moving-away gesture is detected; and
   when an amplitude of the second sound wave signal in the approaching gesture recognition area is greater than the preset amplitude, determining that an approaching gesture is detected.

5. The method according to any one of claims 1 to 4, wherein the performing accumulation on the plurality of first sound wave signals based on a gesture recognition area, to obtain a second sound wave signal comprises:

   performing normalization on the plurality of first sound wave signals separately, to obtain a plurality of normalized first sound wave signals; and

performing accumulation on the plurality of normalized first sound wave signals based on the gesture recognition area, to obtain the second sound wave signal, wherein the gesture recognition area is a frequency area associated with the preset frequency, and the amplitude of the second sound wave signal in the gesture recognition area is greater than an amplitude of each normalized first sound wave signal in the gesture recognition area.

6. The method according to any one of claims 1 to 5, wherein the recognizing a gesture based on the second sound wave signal specifically comprises:

performing noise filtering on the second sound wave signal to obtain a noise-filtered second sound wave signal; and
recognizing a gesture based on the noise-filtered second sound wave signal.

7. The method according to claim 6, wherein the noise filtering comprises at least one of environmental background noise filtering, single-frequency noise filtering, and self-sound filtering of an electronic device.

8. The method according to any one of claims 1 to 7, wherein the sending an ultrasonic wave with a preset frequency specifically comprises:
sending an ultrasonic wave with a preset frequency in response to a detected preset trigger event, wherein the preset trigger event is any one of an alarm clock ringing event, an incoming call event, a timing reminder event, and a light on/off event.

9. The method according to claim 8, wherein the method further comprises:
when it is determined that a gesture is detected, performing any one of the following operations: turning off an alarm clock, answering or rejecting an incoming call, turning off a timing reminder, and turning on or turning off a light.

10. The method according to any one of claims 1 to 9, wherein the second sound wave signal further comprises a non-gesture recognition area, and an amplitude of the second sound wave signal in the non-gesture recognition area is determined by an average value of amplitudes of the plurality of first sound wave signals in the non-gesture recognition area.

11. The method according to any one of claims 1 to 10, wherein the electronic device is any one of a smart speaker, a mobile phone, a large screen, a tablet, or an intelligent switch.

12. An electronic device, comprising a memory, wherein the memory is configured to store computer program code, the computer program code comprises instructions, and when the electronic device reads the instruction from the memory, the electronic device is enabled to perform the method according to any one of claims 1 to 11.

13. A computer-readable storage medium, comprising computer instructions, wherein when the computer instructions are run on the electronic device, the electronic device is enabled to perform the method according to any one of claims 1 to 11.

14. A computer program product, wherein when the computer program product is run on a computer, the computer is enabled to perform the method according to any one of claims 1 to 11.

Ultrasonic wave

Ultrasonic echo

FIG. 1

Electronic device 100

FIG. 2

EP 4 336 312 A1

| A device 10 plays an ultrasonic wave | 301 |

| The device 10 receives an ultrasonic echo, normalizes amplitudes in the ultrasonic echo, and accumulates normalized amplitudes in a gesture recognition area, to obtain a normalized ultrasonic echo | 302 |

| The device 10 filters environmental background noise | 303 |

| The device 10 filters single-frequency noise | 304 |

| The device 10 filters a sound emitted by the device 10 | 305 |

| The device 10 amplifies energy | 306 |

| The device 10 recognizes a gesture | 307 |

FIG. 3

18

FIG. 4

FIG. 5

FIG. 6a

FIG. 6b

FIG. 7

FIG. 8

FIG. 9

| INTERNATIONAL SEARCH REPORT | International application No. |
|---|---|
| | **PCT/CN2022/084149** |

**A. CLASSIFICATION OF SUBJECT MATTER**

G06F 3/01(2006.01)i

According to International Patent Classification (IPC) or to both national classification and IPC

**B. FIELDS SEARCHED**

Minimum documentation searched (classification system followed by classification symbols)

G06F 3/-

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 手势, 识别, 超声波, 回波, 累加, 叠加, 振幅, 幅值, gesture, recognition, ultrasonic, echo, sum, amplitude

**C. DOCUMENTS CONSIDERED TO BE RELEVANT**

| Category* | Citation of document, with indication, where appropriate, of the relevant passages | Relevant to claim No. |
|---|---|---|
| X | CN 105718064 A (NANJING UNIVERSITY) 29 June 2016 (2016-06-29) description, paragraphs 0029-0043 | 1-14 |
| A | CN 107943300 A (SHENZHEN UNIVERSITY) 20 April 2018 (2018-04-20) entire document | 1-14 |
| A | US 10386481 B1 (KING ABDULLAH UNIVERSITY OF SCIENCE AND TECHNOLOGY) 20 August 2019 (2019-08-20) entire document | 1-14 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 June 2022** | **22 June 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/084149**

| Patent document cited in search report | | | Publication date (day/month/year) | Patent family member(s) | Publication date (day/month/year) |
|---|---|---|---|---|---|
| CN | 105718064 | A | 29 June 2016 | None | |
| CN | 107943300 | A | 20 April 2018 | None | |
| US | 10386481 | B1 | 20 August 2019 | None | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110679683